Europäisches Patentamt

European Patent Office

Office européen des brevets

(11) Veröffentlichungsnummer: **0 402 700**
**A1**

# (12) EUROPÄISCHE PATENTANMELDUNG

(21) Anmeldenummer: **90110205.3**

(22) Anmeldetag: **30.05.90**

(51) Int. Cl.⁵: **F16L 21/035**

(30) Priorität: **16.06.89 DE 3919765**

(43) Veröffentlichungstag der Anmeldung:
**19.12.90 Patentblatt 90/51**

(84) Benannte Vertragsstaaten:
**AT BE CH DE DK ES FR GB IT LI LU NL SE**

(71) Anmelder: **MANIBS Spezialarmaturen GmbH & Co. KG**
**Lempstrasse 24**
**D-5630 Remscheid 16 (Bliedinghausen)(DE)**

(72) Erfinder: **Nagel, Michael, Ing.**
**Pfaffenberger Weg 5**
**5650 Solingen(DE)**

(74) Vertreter: **Mentzel, Norbert, Dipl.-Phys. et al**
**Patentanwälte Dipl.-Phys. Buse Dipl.-Phys.**
**Mentzel Dipl.-Ing. Ludewig Unterdörnen 114**
**D-5600 Wuppertal 2(DE)**

(54) **Selbstdichtende Verbindung zwischen einem Rohr und einer Muffe.**

(57) Bei einer Rohrverbindung eines Rohrendes (10) mit einer darüberschiebbaren Muffe (20) wird als Ringdichtung eine Baueinheit (30) verwendet, die aus einem elastisch nachgiebigen Verformungskörper (25) und einem formsteifen Metallring (15, 50) baueinheitlich zusammengesetzt ist. Um eine preiswerte und zuverlässige Rohrverbindung zu erreichen wird vorgeschlagen, die Muffe (20) im Anordnungsbereich der Dichtungsbaueinheit (30) als glattflächigen Zylinder (21) auszubilden, dessen Zylinderinnenfläche (22) mit der Mantelfläche (11) des eingeführten Rohres einen gleichförmig durchlaufenden Ringspalt (14) zur Aufnahme dieser Baueinheit einschließt. In dem Ringspalt (14) befindet sich eine Metallhülse (15) der Dichtungsbaueinheit (30), welche von einem aus dem Material des Verformungskörpers (25) gebildeten Ringwulst (26) radial überragt wird, dessen Wulstspitze (46) sich im Verbindungsfall an der Zylinderinnenfläche (22) verformt. Der Restteil (28) des Verformungskörpers (25) ist gegenüber der Rohrmantelfläche (11) verengt profiliert und weist zur Zylinderinnenfläche (22) hin einen Umriß (35) auf, der kleiner, höchstens gleich dem Umriß der Metallhülse (15) ausgebildet ist.

FIG. 1

EP 0 402 700 A1

## Selbstdichtende Verbindung zwischen einem Rohr und einer Muffe

Die Erfindung richtet sich auf eine Rohrverbindung der im Oberbegriff des Anspruches 1 angegebenen Art. Sie findet beim Auswechseln oder Verlängern von Rohrleitungen, insbesondere bei Gasversorgungsnetzen, Anwendung. Weil ein Stumpfstoß-Schweißen der zu verbindenden Rohre nicht befriedigend ausführbar ist, verwendet man eine gemeinsam überschiebbare Muffe, die mit Ringdichtungen vorübergehend die beiden Rohrenden abdichtet, so daß die endgültige Schweißverbindung unter in den Rohren herrschendem Mediendruck ausgeführt werden kann. In der Endphase werden die Stirnenden der Muffe an den Mantelflächen der beiden Rohre festgeschweißt.

Ursprünglich wurde die Muffe endseitig aufgetulpt, dann die zu verbindenden Rohre eingesteckt und als Ringdichtungen, früher Asbeststricke, heute Keramikstricke, in die trichterförmigen Enden der Muffe eingestapft. Solche Muffen sind zwar preiswert in der Herstellung, doch arbeitsintensiv und kostenaufwendig bei der Herstellung der Ringdichtung. Man strebte daher an, selbstwirksame Ringdichtungen in die Muffe zu integrieren.

Eine Möglichkeit bestand darin, die Muffenwand zu verkröpfen, um zur Rohrachse hin offene Kammern zur Aufnahme von elastischen Dichtungsringen zu erzeugen. (DE-GM 80 29 823; DE-PS 28 42 227). Damit ist zwar die Dichtungsarbeit minimiert, aber es ergeben sich hohe Herstellungskosten zur Profilierung einer solchen Muffe.

Es ist schließlich auch bekannt, die Muffe wandstark auszubilden und die Muffeninnenfläche mit ringförmigen Aussparungen zu versehen, die zur Aufnahme von elastischen Dichtungsringen dienen, die mit den zu verbindenden Rohren zusammenwirken. (DE-PS 938 520; US-PS 31 79 445). In diesem Fall hat man auch kombinierte Ringdichtungen benutzt (DE-PS 2510234), die aus einer vormontierten Baueinheit aus einem elastisch nachgiebigen, profilierten Verformungskörper einerseits und einem daran befestigten formsteifen Metallring andererseits bestanden. Der Verformungsköper dieser Baueinheit war ein Hohlprofil mit einem radialen Außenspalt und einer zur Rohrachse hin gerichteten Dichtlippe. Der Metallring, der einen T-Querschnitt aufweisen konnte, überbrückte den Spalt des Hohlprofils und war an den Spalt-Randteilen des Verformungskörpers befestigt. Im Verbindungsfall kam der Metallring am Grund der Innenaussparung der Muffe zu liegen, während die Dichtlippe mit angrenzenden Bereichen des Verformungskörpers an der Mantelwand des Rohres dichtwirksam anliegen sollte, während die Aussparung der Muffe eine die Rückbiegung der Dichtmuffe gestattende konische Ausnehmung an dieser Stelle aufwies. Diese Muffen sind wegen ihrer hohen Wandstärke materialaufwendig und haben ein hohes Gewicht. Außerdem ist das Einformen der Aussparungen zeitaufwendig und kostspielig.

Der Erfindung liegt die Aufgabe zugrunde, eine preiswerte Rohrverbindung der im Oberbegriff von Anspruch 1 genannten Art zu entwickeln, die sich leicht herstellen läßt und sich durch eine schnelle und bequeme Handhabung auszeichnet. Dies wird durch die im Kennzeichen des Anspruches 1 angeführten Maßnahmen erreicht, denen folgende besondere Bedeutung zukommt:

Weil die erfindungsgemäße Muffe im Anordnungsbereich der Ringdichtung als glatter Zylinder ausgebildet ist, läßt sie sich schnell und preiswert aus einem Rohrabschnitt herstellen. Die Erfindung nutzt ausschließlich den stetig durchlaufenden Ringspalt zwischen der Mantelfläche des Rohres einerseits und der Zylinderinnenfläche der Muffe andererseits zur Anordnung einer besonderen Dichtungsbaueinheit. Äußere oder innere Profilierungen der Muffe sind entbehrlich. Die Dichtungsbaueinheit aus profiliertem Verformungskörper einerseits und Metallring andererseits besorgt eine überraschend zuverlässige, selbsttätige Dichtung. Dadurch kann die Muffe eine beliebige, den jeweiligen Bedürfnissen angepaßte Länge aufweisen, die nicht an ein Bearbeitungswerkzeug gebunden ist. Auch die Längslage der Dichtungsbaueinheit innerhalb der Muffe ist variabel. Die Dichtungsbaueinheit wird ins Zylinderinnere eingeführt, wo sie in der gewünschten Muffenzone durch die Deformationen des Ringwulstes an der relativ formsteifen Metallhülse kraftschlüssig haftet. Dabei kommt es auch schon zu Dichtungswirkungen gegenüber der Zylinderinnenfläche. Eine solche kraftschlüssige Verbindung zwischen der zylindrischen Muffe und der Dichtungsbaueinheit ist mindestens bis zu einem Mediendruck von 8 bar wirksam. Bei höheren Mediendrucken, die über 100 bar liegen können, kann eine Klebeverbindung oder ein Anpunkten der Metallhülse durch Schweißen die Position der Dichtungsbaueinheit in der zylindrischen Muffe verbessern. Die so mit der Dichtungsbaueinheit ausgerüstete zylindrische Muffe wird als Handelsprodukt vertrieben. Das bzw. die damit zu verbindenden Rohrenden brauchen dann nur noch in die Muffe eingeschoben zu werden, wobei es an der radial nach innen gerichteten Profilierung des Verformungskörpers zu elastischen Deformationen kommt, die eine ideale Abdichtung gegenüber der Mantelfläche des Rohres erzeugen. Die zylindrische Muffe kann als sogenanntes U-Stück zur Verbindung zweier Rohrenden dienen, weshalb dann die Zylindermuffe in ihren beiden Halbzonen spiegelbildlich gleich ausgebildet ist. Die Zylindermuffe kann auch an einer Seite mit einem Außenflansch als sogenanntes "M-Stück" ausgebildet sein und nur zur Verbindung eines Rohrendes dienen, während der Außenflansch anderweitig an einem Ventilstück od. dgl. befestigt wird. Abschließend wird das Stirnende der Zylindermuffe an der Mantelfläche des eingeführten Rohres mit einer umlaufenden Schweißnaht verbunden. Es empfiehlt sich daher, den Endabschnitt der Zylindermuffe mit einer konischen, gegen die Rohrachse gerichteten Verjüngung zu versehen.

In Abhängigkeit davon, welche Nenndurchmesser das zu verbindende Rohr aufweist, werden Dichtungsbaueinheiten mit unterschiedlich profilier-ten Verformungskörpern und Ringwulsten verwen-det, deren Gestaltung in den Ausführungsbeispielen sowie in den Unteransprüchen näher angeführt sind. Für Rohre geringen Durchmessers stehen Zylindermuffen mit größerem Zylinderinnendurchmesser zur Verfügung, die einen größeren Ringspalt zur Rohrmantelfläche erzeugen, der durch entsprechende Radialprofile des Verformungskörpers auszugleichen ist. Die sich dazu ergebenden Maßnahmen und Vorteile der Erfindung sind aus den Zeichnungen und der nachfolgenden Beschreibung ersichtlich. Die Erfindung richtet sich dabei auf alle daraus entnehmbaren neuen Merkmale und Merkmalskombinationen, auch wenn diese nicht ausdrücklich in den Ansprüchen angeführt sein sollten.

In den Zeichnungen ist die Erfindung in drei Ausführungsbeispielen dargestellt. Es zeigen:

Fig. 1 den Axialschnitt einer ersten, fertigen Rohrverbindung, wo die Zylindermuffe als U-Stück ausgebildet ist,

Fig. 2 einen Radialschnitt durch die Dichtungsbaueinheit für die Rohrverbindung von Fig. 1, vor deren Einbau, worin strichpunktiert die Position des mit der zugehörigen Zylindermuffe erzeugten Vorprodukts angedeutet ist,

Fig. 3 in einer der Fig. 2 entsprechenden Darstellung die an der Dichtungsbaueinheit sich ergebende elastische Deformation nach Einführung des zugehörigen Rohrendes,

Fig. 4 in einer der Fig. 2 entsprechenden Darstellung eine zweite Ausführungsform der erfin-dungsgemäßen Dichtungsbaueinheit vor der Rohr-verbindung,

Fig. 5 in einem der Fig. 3 entsprechenden Axialschnitt die sich bei einem größeren Ringspalt ergebende Deformation des zur Baueinheit gehörenden Verformugnskörpers nach Einführen des zugehörigen Rohrendes,

Fig. 6 den Axialschnitt einer dritten Ausführungsform der Dichtungsbaueinheit vor ihrem Einbau und schließlich

Fig. 7 den Axialschnitt der fertigen Rohrver-bindung unter Verwendung der Dichtungsbauein-heit von Fig. 6.

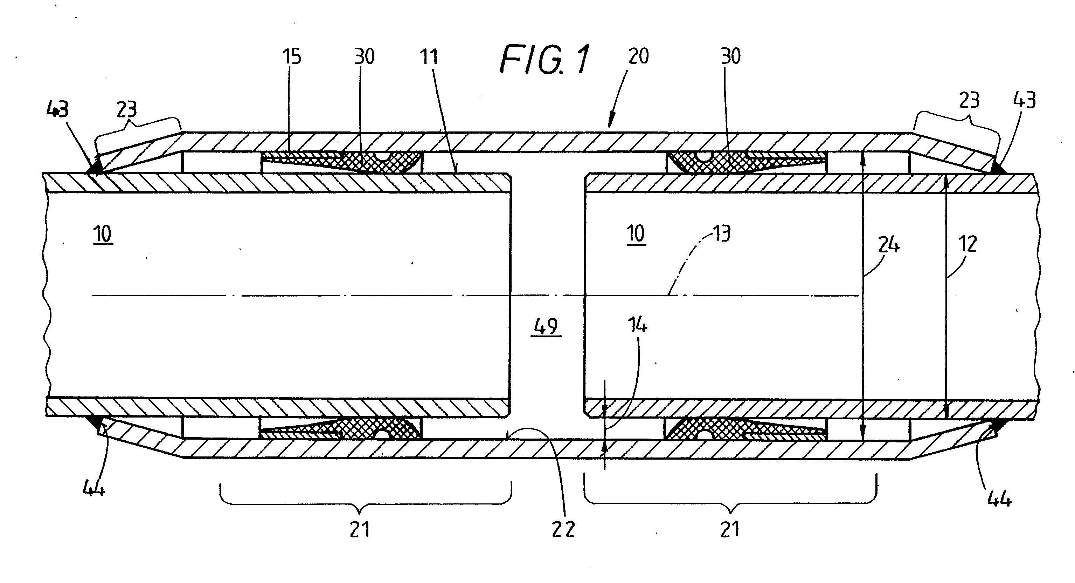

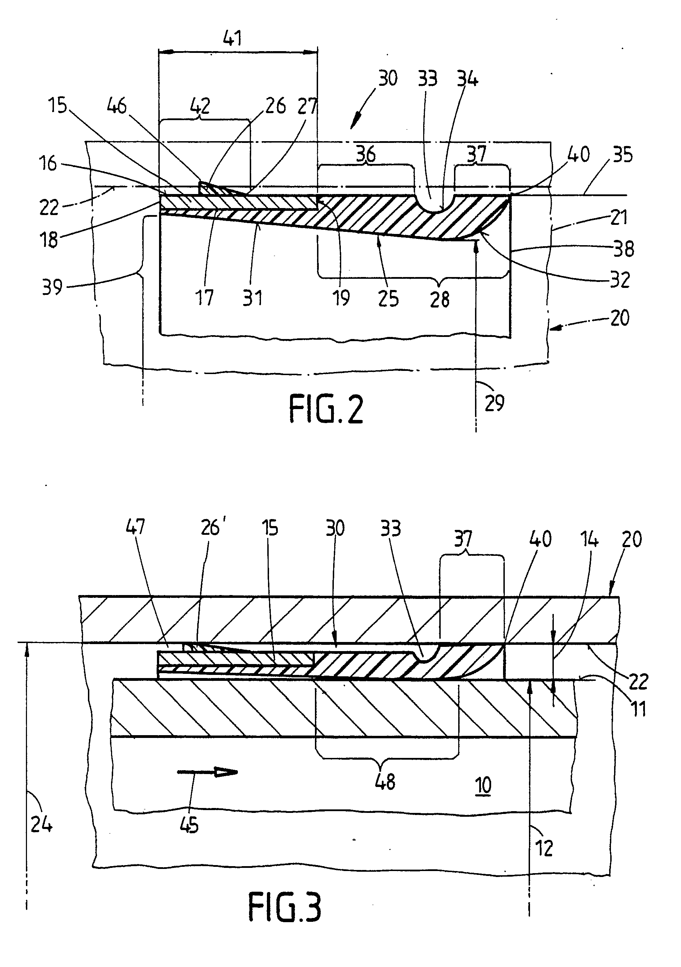

In der in Fig. 1 gezeigten Verbindung sollen zwei Rohre 10 durch eine darüber schiebbare Muffe 20 mittels zweier Ringdichtungen 30 verbunden werden. Die Ringdichtungen 30 haben das am besten aus Fig. 2 ersichtliche Aussehen, das prinzipiell folgenden Gesetzmäßigkeiten folgt:

Die Ringdichtung ist eine Baueinheit 30 aus zwei fest miteinander verbundenen artunterschiedlichen Materialien, zu denen ein hier als Stahlhülse 15 ausgebildeter Metallring gehört, der eine gegenüber der Muffe 20 geringere Wandstärke von ca. 2 mm aufweist. An diese als formsteife Armierung dienende Hülse 15 ist, vorzugsweise durch einen Vulkanisiervorgang, ein besonders profilierter Körper 25 aus Gummi oder gummiartigen Werkstoffen befestigt. Nach ihrer Fertigstellung wird diese Baueinheit 30 in das Muffeninnere eingeschoben, wo es zu einer kraftschlüssigen Verbindung mit der Innenfläche 22 kommt. Die Muffe besteht nämlich im Anordnungsbereich der Baueinheit 30 aus einem glattwandigen Zylinder 21. Erst die axial entfernt davon angeordneten Muffenendbereiche 23 können nachträglich konisch eingezogen sein, um abschließend die Muffenstirnflächen 44 an die Rohrmantelflächen 11 der, im Falle der Fig. 1, beidendig einzuführenden Rohrenden 10 durch Schweißnähte 43 festzulegen und endgültig abzudichten.

Die Dichtungsbaueinheit 30 besitzt auf der Außenseite 16 ihrer Metallhülse 15 einen hier keilförmig profilierten Ringwulst 26, der in kürzerer Entfernung von der äußeren Hülsenstirnfläche 18 angeordnet ist. Der Ringwulst 26 ist zwar aus dem gleichen Werkstoff wie der Verformungskörper 25 ausgebildet und daher, wie Fig. 3 erkennen läßt, gemäß 26′ deformierbar, aber von diesem Restteil 28 des Verformungskörpers getrennt, der an der Hülseninnenseite 17 und an der inneren Hülsenstirnfläche 19 sitzt. Abgesehen von der noch näher zu beschreibenden radial nach innen, gegen die Rohrachse 13 von Fig. 1 gerichteten Profilierung 31, 32 ist der Verformungskörper 25 im wesentlichen in axialer Verlängerung 28 der Metallhülse 15 angeordnet und hat im gelösten Zustand folgende aus Fig. 2 erkennbare Form. Diese Verlängerung 28 besitzt eine im wesentliche zylindrische Umfangsfläche 35, wie aus der Hilfslinie in Fig. 2 erkennbar ist, welche die Hülsenaußenseite 16 konform fortsetzt. Abgesehen von dem beschriebenen Ringwulst 26 übersteigt der Verformungskörper 25 in dieser Verlängerung 28 nicht die Hülsenaußenseite 16. Im Gegenteil, die zylindrische Umfangsfläche 35 ist durch eine umlaufende Rinne 33 unterbrochen, deren Rinnengrund 34 in axialer Blickrichtung unterhalb der Hülseninnenseite 17 zu liegen kommt. Diese Rinne 33 nimmt dabei einen Axialabstand 36, 37 sowohl gegenüber der inneren Hülsenstirnfläche 19 als auch gegenüber dem freien Stirnende 38 der Verlängerung 28 ein, weshalb dazwischen zylindrische Flächenzonen 36, 37 entstehen. Die Rinne 33 besitzt dabei einen halbkreisförmigen oder U-förmigen Öffnungsquerschnitt.

Die erwähnte, radial nach innen gerichtete Profilierung des Verformungskörpers 25 besteht aus zwei formunterschiedlichen Abschnitten 31, 32. Sie umfaßt zunächst eine negative Kegelfläche 31, deren Basiskreis 29 sich in jedem Fall im Bereich der Metallhülse 15 befindet, weshalb der Öffnungswinkel dieser Kegelfläche 31 im noch näher zu beschreibenden, vormontierten Zustand innerhalb der Muffe 20 der Muffenöffnung zugekehrt ist, also in Richtung der in Fig. 3 durch den Pfeil 45 angedeuteten abschließenden Einführbewegung des Rohrendes 10 in die Muffe 20 gemäß Fig. 3 sich verengt. Es liegt dabei eine Verengung 29 vor, die gegenüber der Rohrmantelfläche 11 weiter radial nach innen ragt, also einen Kopfkreis 29 bestimmt, der einen gegenüber dem Rohrdurchmesser 12 verengten Kopfkreisdurchmesser gemäß Fig. 2 aufweist. Dieser Kopfkreis 29 liegt etwa im Bereich der umfangsseitig die Rinne 33 aufweisenden Zone. Vom Kopfkreis 29 an schließt sich an die Kegelfläche 31 eine trichterförmige Erweiterung wieder an, die hier eine bogenförmige Kontur 32 aufweist. Es kommt dabei zu einem Schnitt dieser Konturfläche 32 mit der vorbeschriebenen, insbesondere zylindrischen Umfangsfläche 35 in der Verformungskörper-Verlängerung 28, weshalb am Stirnende 38 eine spitzwinklige Dichtungslippe 40 entsteht. Im vorliegenden Fall erstreckt sich der Verformungskörper 25 mit seiner Kegelfläche 31 über die ganze Hülsenlänge 41, weshalb ihr Basiskreis 39 mit der äußeren Hülsenstirnfläche 18 abschließt.

In Fig. 2 ist strichpunktiert die Lage des Muffenzylinders 21 in radialer Hinsicht bezüglich der Dichtungsbaueinheit 30 angedeutet, wenn das Vorprodukt aus den beiden Teilen 20, 30 montiert worden ist. Wie ersichtlich, ist der in Fig. 1 verdeutlichte Muffeninnendurchmesser 24 so gewählt, daß, ausweislich der Fig. 2, die radiale Keilkante 46 die Zylinder innenfläche 22 radial überragt, etwa 1 bis 2 mm. Der Keilwinkel beträgt ca. 15°, maximal aber 30°. Die Keilspitze 27 ist dabei der Umfangsrinne 33 zugekehrt, weist also in Richtung der Einführbewegung der Dichtungsbaueinheit 30 bei der Montage in der Muffe 20. Es kommt dabei zu der erwähnten Deformation 26' des Ringwulstes gemäß Fig. 3, wobei eine kleine Lücke 47 zwischen der Hülsenaußenseite 16 im dortigen Hülsenendbereich 42 und der Zylinderinnenfläche 22 der Muffe 20 verbleiben kann. Diese endseitige Belastung kann die Metallhülse 15 verwinden, was sich in einer zunehmenden Anlage der Dichtlippe 40 an der Zylinderinnenfläche 22 bemerkbar macht. In jedem Fall sorgt der deformierte Ringwulst 26' für eine kraftschlüssige Verbindung zwischen der Muffe 20 und der in ihr montierten Dichtungsbaueinheit 30. Diese kann, wie Versuche zeigen, ohne weiteres Mediendrucken im Rohr 30 von 8 bar standhalten. Bei sehr hohen Drücken könnte man die Hülse 15 im Bereich ihrer äußeren Stirnfläche 18 durch nicht näher gezeigte Schweißstellen auch an der Zylinderinnenfläche 22 anpunkten.

In einem solchen vormontierten Produkt 20, 30 behält die Dichtungsbaueinheit 30 ihre Lage auch dann bei, wenn das zugehörige Rohr 10 in die Muffe 20 im Sinne des aus Fig. 3 ersichtlichen bereits erwähnten Einführpfeils 45 eingesteckt wird. Die Baueinheit 30 kommt dabei in einem gleichförmigen Ringspalt 14 zu liegen, der von den beiden glatten Rohrflächen der Rohrmantelfläche 11 einerseits und der Zylinderinnenfläche 22 gebildet wird. Es kommt dabei zu der bereits erwähnten radialen Verformung zwischen der verengt ausgebildeten Verlängerung 28 des Verformungskörpers 25 einerseits und der vom Rohrdurchmesser 12 bestimmten Rohrmantelfläche 11. Es entsteht dabei zunächst eine breitflächigen Anlage 48 der Radialinnenprofilierung, aber auch der Endabschnitt 37 wird durch Druckausübung um die als Scharnier fungierende Rinne 33 radial nach außen verkippt und drückt die scharfkantige Dichtlippe 40 gegen die glatte Zylinderinnenfläche 22. Das Medium im Rohr 10, wie ein brennbares Haushalts-Gas, bleibt daher, wie aus Fig. 1 zu entnehmen ist, auf den zwischen den bei 30 abgedichteten Rohrenden 10 eingeschlossenen Zylinderinnenraum 49 in der Muffe 40 begrenzt. Die Muffe 20 hat die Rohre 10 selbsttätig abgedichtet. Die weiteren Arbeiten an der Muffe 20 können ungestört ausgeführt werden. Die Muffenendbereiche 23 können konisch zusammengedrückt und die Stirnflächen 44 mit der bereits erwähnten Schweißnaht 43 am Rohr 10 festgeschweißt werden.

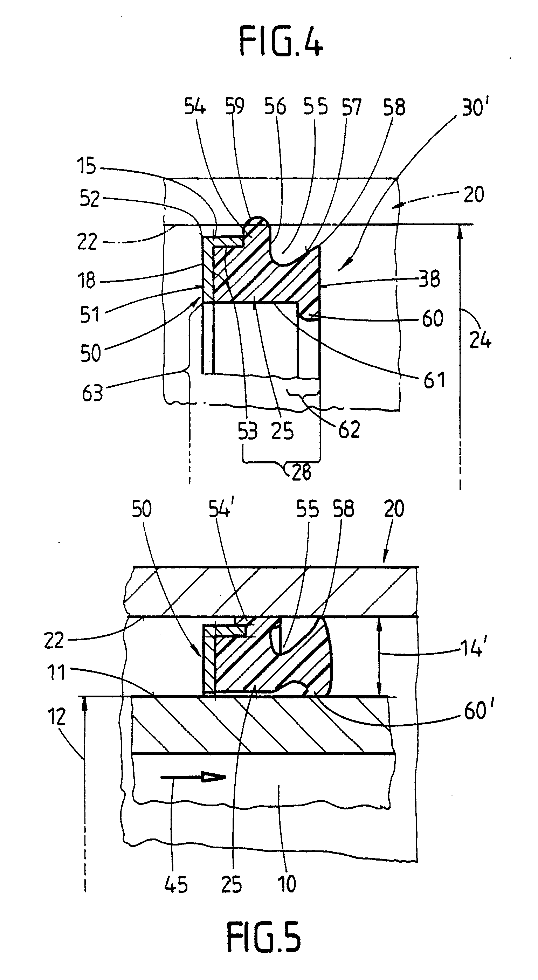

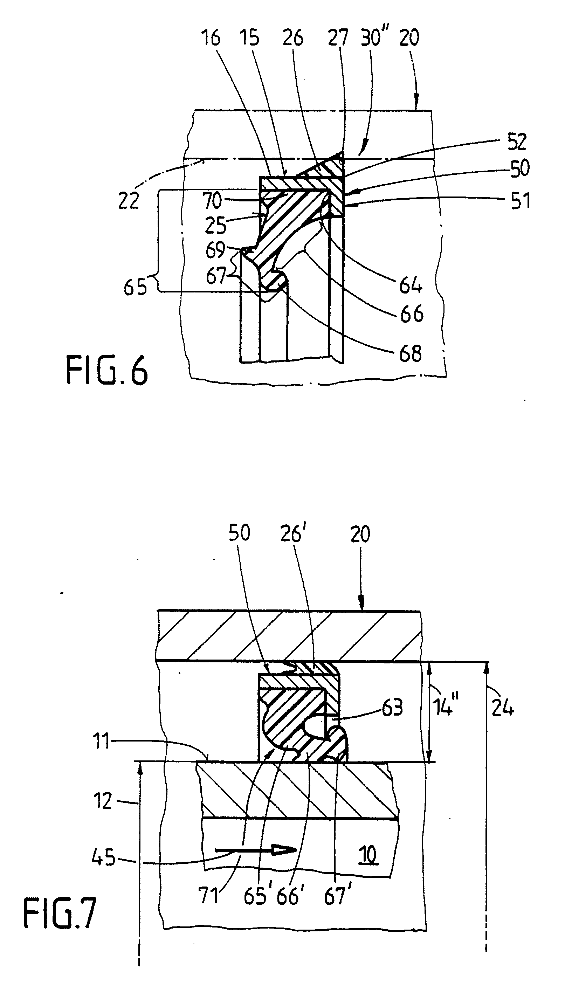

Die Dichtungsbaueinheit 30 gemäß Fig. 1 bis 3 ist bei Rohrdurchmessern 12 in Verbindung mit Muffen 20 anwendbar, wo ein verhältnismäßig kleiner Ringspalt 14 bis ca. zu 7 mm vorliegt. Für kleinere Rohrdurchmesser 12, bei denen ein größerer, aus Fig. 5 ersichtlicher Ringspalt 14' von über 7 mm bis ca. 15 mm entsteht, wird man die Dichtungsbaueinheit 30' gemäß Fig. 4 und 5 benutzen. Fig. 4 zeigt die Baueinheit 30' vor ihrem Einbau, in gelöstem Zustand und Fig. 5 die Baueinheit 30' im Verbindungsfall. Zur Bezeichnung entsprechender Bauteile sind die gleichen Bezugszeichen wie im ersten Ausführungsbeispiel verwendet, weshalb insoweit die bisherige Beschreibung gilt. Es genügt, lediglich auf die Unterschiede einzugehen. Die Metallhülse 15 ist, gemäß Fig. 4, nur ein Bestandteil eines winkelförmigen Metallrings 50, an dessen äußerer Stirnfläche 18 sich eine Ringscheibe 51 radial anschließt, so daß eine äußere Winkelkante 52 entsteht. Dadurch entsteht ein innerer Winkelbereich, in welchem der zugehörige Verformungskörper 25 mit einem Basisprofil 52 durch Anvulkanisieren oder Kleben, vorzugsweise vollflächig, verbunden ist, weil es eine dazu komplementäre Winkelform aufweist. Der Verformungskörper 25 ist auch hier über den Schenkelbereich des Winkelrings 50 axial bei 28 verlängert und besitzt an seiner Umfangsfläche einen einstückig damit ausgebildeten Ringwulst 54, der hier als radial gegliederte Rippe von etwa U-förmigem Umriß gebildet ist. An diesen Ringwulst 54 schließt sich im Umfangsbereich ebenfalls eine Rinne 55 mit vorzugsweise V-förmigem Öffnungsquerschnitt an. Der eine V-Schenkel 56 begrenzt die vorerwähnte Radialrippe 54, während der andere V-Schenkel 57 die auch hier im wesentlich radial verlaufende Endfläche 38 des Verformungskörpers 25 schneidet und daher dort eine Außenkante 59 entstehen läßt.

Dieser Außenkante 58 gegenüber befindet sich ein Innenbund 60, der gegen die aus Fig. 1 ersichtliche Rohrachse 13, radial nach innen, gerichtet ist. Ihm benachbart besitzt der Verformungskörper 25 eine vorzugsweise zylindrisch gestaltete Innenfläche 61, die nicht, in axialer Projektion gesehen, die Ringöffnung 63 der vorerwähnten Ringscheibe 51 radial verengt. Die Verengungen der Ringöffnung 63 erfolgen vielmehr ausschließlich in dem Endabschnitt 62 des Verformungskörpers 25, welcher dem Winkelring 50 abgekehrt ist. Sieht man von der Außenrippe 54 ab, so hat der Verformungskörper 25 annähernd die Form eines T, wo die Innenfläche 61 den T-Schaft und die beiden radial voneinander weggerichteten Radialvorsprünge 58, 60 den T-Balken bestimmen.

Auch diese Dichtungsbaueinheit 30′ wird mit einer entsprechenden Muffe 20 vormontiert, die einen entsprechenden glattwandigen Zylinder aufweist, dessen Zylinderinnenfläche 22, wie strichpunktiert in Fig. 4 verdeutlicht, aufgrund des verfügbaren Muffendurchmessers 24 im Höhenbereich des Ringwulstes 54 zu liegen kommt. Auch hier kommt es im Bereich der Wulstspitze 59 zu einer Deformation im Sinne der aus Fig. 5 ersichtlichen Wulstform 54′. Dadurch kommt wieder die kraftschlüssige Verbindung zwischen der Dichtungsbaueinheit 30 und der Zylindermuffe 20 zustande. Dieses vormontierte Produkt 20, 30′ wird in den Handel gebracht und dient zur selbstdichtenden Aufnahme von Rohrenden 10.

Die Zylindermuffe 20 kann wieder Bestandteil eines bereits in Fig. 1 gezeigten U-Stücks sein, wo wieder zwei Rohrenden 10 miteinander verbunden werden sollen, wobei der Pfeil 45 in Fig. 5 die Orientierung der Dichtungsbaueinheit 30′ im Muffeninneren verdeutlicht. Alternativ könnte die Zylindermuffe 20 nur zur Aufnahme eines Rohres 10 dienen, weil sie mit einem Befestigungsflansch od. dgl. ausgerüstet ist, wie bereits erwähnt wurde. In jedem Fall liegt auch hier ein Rohrdurchmesser 12 vor, gegenüber welchem der aus Fig. 4 ersichtliche Innenbund 60 eine radiale elastisch nachgiebige Verengung darstellt. Es kommt daher auch hier zu einer Deformation 60′ des Innenbundes an der Rohrmantelfläche 11, wodurch das hammerkopfförmige T-Ende 58, 60 im Grundbereich seiner Rinne 55 radial nach außen geschwenkt wird, so daß schließlich mehr oder weniger auch die erwähnte Außenkante 58 die Zylinderinnenfläche 22 dichtwirksam berührt und daher wie eine Dichtlippe wirkt. Der Winkelring 50 kommt dabei im wesentlichen berührungsfrei innerhalb des bereits erwähnten größeren Ringspalts 14′ zwischen den beiden zylindrischen Flächen 11, 22 zu liegen. Die Dichtwirkungen ergeben sich ausschließlich durch die beschriebenen Radialvorsprünge 54′, 60′ und ggf. 58 am elastisch nachgiebigen Verformungskörper 25.

Sofern Rohrenden 10 dichtwirksam angeschlossen werden sollen, die eine gegenüber dem Muffeninnendurchmesser 24 noch kleineren Rohrdurchmesser 12 aufweisen, so daß schließlich der aus Fig. 7 ersichtliche sehr große Ringspalt 14″ von ca. über 15 mm entsteht, so wird eine Dichtungsbaueinheit 30″ verwendet, deren Aussehen vor der Montage aus Fig. 6 und nach der Verbindung aus Fig. 7 zu entnehmen ist. Auch hier werden zur Bezeichnung analoger Bauteile die gleichen Bezugszeichen wie im vorausgehenden Ausführungsbeispiel verwendet, weshalb insoweit die entsprechende bisherige Beschreibung gilt. Es genügt, lediglich auf die Unterschiede einzugehen.

Als steifes Gerüst zur Armierung der Baueinheit 30″ dient auch hier ein Winkelring 50, der aber gegenüber dem Ausführungsbeispiel von Fig. 5 andere Schenkellängen an seiner Metallhülse 15 einerseits und seiner Ringscheibe 51 andererseits aufweist. Auf der Außenseite 16 der Metallhülse 15 befindet sich ein keilförmiger Ringwulst 26, der zwar aus vorzugsweise dem gleichen elastischen Werkstoff besteht, aber gegenüber dem übrigen Verformungskörper 25 getrennt ist, welcher dem Innenscheitel 64 des metallischen Winkelrings 50 zugekehrt ist. Der Keilwinkel des Ringwulstes 26 ist größer als im ersten Ausführungsbeispiel gemäß Fig. 1 bis 3 ausgebildet und liegt bei ca. 25°. Bewährt hat sich dabei, den Keilverlauf spiegelbildlich zum ersten Ausführungsbeispiel auszubilden und dabei die Keilspitze 27 von der Winkelkante 52 des Metallrings 50 wegzurichten. Auch hier liegt die Keilspitze 27, wie der strichpunktiert in Fig. 6 angedeutete Lage der damit zu kuppelnden Zylindermuffe 20 zu entnehmen ist, radial oberhalb der maßgeblichen Zylinderinnenfläche 22, weshalb es hier zu einer Deformation 26′ des Ringwulstes gemäß Fig. 7 kommt. Der Verformungskörper 25 hat dabei folgende besondere, am besten aus Fig. 6 ersichtliche Gestalt, um den bereits erwähnten, sehr großen Ringspalt 14″ nach dem Einführen des Rohrendes 10 im Sinne des Pfeils 45 zu überbrücken.

Der Verformungskörper 25 hat hier ein stiefelförmiges Radialprofil 65, bestehend aus einem etwa diagonal zum Innenscheitel 64 verlaufenden Stiefelschaft 66 und einem dazu mit gegensätzlicher Neigung verlaufenden Stiefelfuß 67, dessen Fußspitze 68 gerundet ist. Der Stiefelfuß 67 umfaßt zweckmäßigerweise auch noch eine Fußferse 69, die ein vorzugsweise axial gerichtetes Dornprofil aufweist, welches dann in den radial darüberliegenden, sich etwa V-förmig erweiternden Stiefelschaft 66 übergeht. Das Stiefelschaftende 70 dieses Radialprofils 65 besitzt eine winkelförmige Basis, die zu einer vollflächigen Verbindung mit den Scheitelinnenflächen 64 des Winkelrings 50 sorgt, was durch Anvulkanisieren oder Kleben erfolgen kann.

Bezogen auf die durch den Pfeil 45 verdeutlichte Einführbewegung des Rohrendes 10 ist der Verlauf des Stiefelschafts 66 in seiner Neigung entgegengerichtet, während der dazu gegensinnige Stiefelfuß 67 eine in Einführrichtung 45 weisende Komponente besitzt. Dadurch kommt es zu der aus Fig. 7 ersichtlichen Kippbewegung 71 des Radialprofils unter seiner aus Fig. 7 ersichtlichen Deformation 65′.

Wie aus Fig. 7 ersichtlich, hat sich die Fußspitze 68 an der Mantelfläche 11 des eingeführten Rohrendes 10 abgerollt und der ganze Stiefelfuß 67′ ist unter Abknickung des Stiefelschafts 66′ in den Bereich der Ringöffnung 63 des metallischen Winkelrings 50 gekommen. Die ein Dornprofil aufweisende, aus Fig. 6 ersichtliche Fußferse 69 kann sich dabei als zusätzlich verformbare Lippe an die Rohrmantelfläche 11 dichtend angelegt haben. Das Ausmaß der vorbeschriebenen Einrollbewegung 71 des stiefelförmigen Radialprofils in der Deformationsstellung 65′ hängt natürlich von der Größe des anfallenden Ringspalts 14″ ab.

Bezugszeichenliste:

10 Rohrende
11 Rohrmantelfläche
12 Rohrdurchmesser
13 Rohrachse
14 kleiner Ringspalt (Fig. 1 bis 3)
14′ größerer Ringspalt (Fig. 4, 5)
14″ großer Ringspalt (Fig. 6, 7)
15 Metallhülse, metallische Ringarmierung
16 Außenseite von 15
17 Innenseite von 15
18 äußere Stirnfläche von 15
19 innere Stirnfläche von 15
20 Muffe, Zylindermuffe
21 Zylinder im Bereich von 30
22 Zylinderinnenfläche
23 konischer Endbereich von 20
24 Muffeninnendurchmesser
25 Verformungskörper
26 keilförmiger Ringwulst (Ausgangslage, Fig. 2, 6)
26′ deformierter Ringwulst (Verbindungslage, Fig. 5, 7)
27 Keilspitze
28 Restteil von 25, axiale Verlängerung
29 Verengung von 28, Kopfkreis von 31
30 Dichtungsbaueinheit, Ringdichtung (Fig. 1 bis 3)
30′ Dichtungsbaueinheit, (Fig. 4, 5)
30″ Dichtungsbaueinheit (Fig. 6, 7)
31 Radialinnenprofilierung, Kegelfläche (Fig. 2)
32 Radialinnenprofilierung, bogenförmige Kontur (Fig. 2)
33 umlaufende Rinne in 35 (Fig. 2)
34 Rinnengrund
35 Umfangsfläche von 28 (Fig. 2)
36 Axialabstand zwischen 33, 35, Axialzone (Fig. 2)
37 Axialabstand zwischen 33, 38, Endabschnitt von 28 (Fig. 2)
38 Stirnende von 25 (Fig. 2, 4)
39 Basiskreis von 31
40 Dichtlippe von 28 (Fig. 2, 3)
41 axiale Hülsenlänge
42 freier Endbereich von 15 (Fig. 2)
43 Schweißnaht
44 Muffenstirnfläche
45 Einführbewegungs-Pfeil von 10
46 Wulstspitze, radiale Keilkante
47 Lücke
48 Anlagefläche zwischen 28, 11
49 Zylinderinnenraum
50 metallischer Winkelring
51 Ringscheibe von 50
52 Winkelkante von 50
53 winkelförmiges Basisprofil von 25 (Fig. 4)
54 gegliederter Ringwulst, Radialrippe (Ausgangszustand Fig. 4)
54′ deformierte Radialrippe (Fig. 5)
55 umlaufende Rinne
56 V-Schenkel von 55
57 V-Schenkel von 55
58 Außenkante bei 62 (Fig. 4, 5)
59 Wulstspitze von 54
60 Innenbund von 62 (Fig. 4)
60′ deformierter Innenbund (Fig. 5)
61 zylindrische Innenfläche von 25 (Fig. 4)
62 T-balkenförmiger Endabschnitt von 25 (Fig. 4)

63 Ringöffnung von 51

64 Innenscheitel von 50 (Fig. 6) stiefelförmiges Radialprofil von 25 (Ausgangslage Fig. 6)

65' deformiertes Radialprofil (Verbindungslage Fig. 7)

66 Stiefelschaft von 65 (Ausgangslage, Fig. 6)

66' deformierter Stiefelschaft (Verbindungslage, Fig. 7)

67 Stiefelfuß von 65 (Ausgangslage, Fig. 6)

67' deformierter Stiefelfuß (Verbindungslage, Fig. 7)

68 gerundete Fußspitze

69 Fußferse mit Dornprofil

70 befestigungswirksames Stiefelschaftende

71 Einrollbewegung zwischen 65, 65' (Fig. 7)

**Ansprüche**

1. Selbstdichtende Verbindung zwischen dem Ende eines glattwandigen Rohres (10) und einer darüber schiebbaren Muffe (20) mittels einer Ringdichtung,
die eine vormontierte Baueinheit (Dichtungsbaueinheit 30) ist aus einem elastisch nachgiebigen, profilierten Verformungskörper (25) einerseits und aus einem daran befestigten formsteifen Metallring (15; 50) andererseits,
insbesondere eine die Spitzenden zweier achsgleicher (13) Rohre (10) verbindende Überschiebmuffe (20),
**dadurch gekennzeichnet,**
daß die Muffe (20) im Anordnungsbereich der Dichtungsbaueinheit (30) ein unausgesparter, unverkröpfter, glattflächiger Zylinder (21) ist, dessen Zylinderinnenfläche (22) mit der Mantelfläche (11) des Rohres einen durchlaufend gleichförmigen Ringspalt (14) zur Aufnahme der ganzen Dichtungsbaueinheit (30) einschließt,
und der Metallring der Baueinheit (30) eine zum Zylinder (21) koaxiale, im Ringspalt (14) verlaufende Metallhülse (15) aufweist,
die von einem zum Verformungskörper (25) gehörenden Ringwulst (26) radial überragt wird, dessen Wulstspitze (46) sich im Verbindungsfall an der Zylinderinnenfläche (22) verformt (26'),
und der Restteil (28) des gegenüber der Rohr-Mantelfläche (11) verengt (29) profilierten (31, 32) Verformungskörpers (25) im Lösungsfall kleiner/gleich dem Umriß (35) der Metallhülse (15) ausgebildet ist.

2. Rohrverbindung nach Anspruch 1, dadurch gekennzeichnet, daß der Ringwulst (26), vom Restteil (28) des Verformungskörpers (25) getrennt, auf der gegenüberliegenden, der Zylinderinnenfläche (22) zugekehrten Außenseite (16) der Metallhülse (15) befestigt ist, (Fig. 2, 6).

3. Rohrverbindung nach Anspruch 2, dadurch gekennzeichnet, daß der getrennte Ringwulst ein Keilprofil (26) aufweist.

4. Rohrverbindung nach Anspruch 1, dadurch gekennzeichnet, daß der Ringwulst einstückig mit dem Verformungskörper (25) ausgebildet und von einem radial gegliederten Profilstück (54) erzeugt ist, (Fig. 4).

5. Rohrverbindung nach Anspruch 4, dadurch gekennzeichnet, daß der einstückige Ringwulst aus einer am inneren Stirnende (19) der Metallhülse (15) vorbeilaufenden Radialrippe (54) besteht, (Fig. 4).

6. Rohrverbindung nach einem oder mehreren der Ansprüche 1 bis 5, dadurch gekennzeichnet, daß die Metallhülse (15) einstückiger Bestandteil eines metallischen Winkelrings (50) ist, der an der äußeren Stirnfläche (18) der axialen Metallhülse (15) eine im wesentlichen radiale Ringscheibe (51) aufweist, wobei der Verformungskörper (25) ein in den Winkelbereich zwischen der Metallhülse (15) und der Ringscheibe (51) eingreifendes Basisprofil (53) aufweist, das zur Befestigung dient, (Fig. 4, 6).

7. Rohrverbindung nach einem oder mehreren der Ansprüche 1 bis 6, dadurch gekennzeichnet, daß der Verformungskörper (25) und ggf. sein Ringwulst (26) durch Vulkanisieren mit der Metallhülse und/oder der Ringscheibe befestigt ist, (Fig. 2 bis 7).

8. Rohrverbindung nach einem oder mehreren der Ansprüche 1 bis 7, dadurch gekennzeichnet, daß der Verformungskörper (25), abgesehen von seiner zur Rohrachse (13) hin gerichteten Radialprofilierung (31, 32), im wesentlichen in axialer Verlängerung (28) der Metall hülse (15) sich erstreckt, (Fig. 2, 4).

9. Rohrverbindung nach einem oder mehreren der Ansprüche 1 bis 8, dadurch gekennzeichnet, daß der Verformungskörper (25) in seinem die Metallhülse (15) verlängernden Abschnitt (28) eine äußere, im Verbindungsfall der Zylinderinnenfläche (22) zugekehrte, umlaufende Rinne (33; 55) aufweist, deren Rinnengrund (34), in axialer Projektion, die Innenseite (17) der Metallhülse (15) radial unterschreitet, (Fig. 2, 4).

10. Rohrverbindung nach Anspruch 9, dadurch gekennzeichnet, daß die vorzugsweise einen U-Öffnungsquerschnitt aufweisende Rinne (33) inmitten einer äußeren, die Metallhülse (15) konform fortsetzende Umfangsfläche (35) des Verformungskörpers (25) eingelassen ist und einen Axialabstand (36; 37) sowohl zur inneren Stirnfläche (19) der Metallhülse (15) als auch zum eine Dichtlippe (40) erzeugenden freien Stirnende (38) des Verformungskörpers (25) aufweist, (Fig. 2).

11. Rohrverbindung nach Anspruch 10, dadurch gekennzeichnet, daß die zur Rohrachse (13) hin gerichtete innere Radialprofilierung des Verformungskörpers (25) aus einer konkaven Kegelfläche (31) besteht, deren Basiskreis (39) an der Metallhülse (15) sich befindet und deren Kopfkreis (29) in der die Rinne (33) aufweisenden Zone liegt, und die Kegelfläche (31) im Endabschnitt (37) des Verformungskörpers (25) in eine insbesondere bogenförmige, sich wieder radial erweiternde Kontur (32) übergeht, die sich mit der äußeren Umfangsfläche (35) des Verformungskörpers (25) schneidet und dort die scharfkantige Dichtlippe (40) erzeugt, (Fig. 2).

12. Rohrverbindung nach Anspruch 11, dadurch gekennzeichnet, daß die Kegelfläche (31) sich über die ganze axiale Länge (41) der Metallhülse (15( erstreckt und der Basiskreis (39) an der äußeren Stirnfläche (18) der Metallhülse (15) liegt, (Fig. 2).

13. Rohrverbindung nach einem oder mehreren der Ansprüche 1 bis 9, dadurch gekennzeichnet, daß die vorzugsweise einen V-Öffnungsquerschnitt aufweisende Rinne (55) mit ihrem einen V-Schenkel (56) den einstückigen Ringwulst (54) begrenzt und mit ihrem anderen V-Schenkel (57) eine im wesentlichen radiale Endfläche (38) des Verformungskörpers (25) schneidet und dort eine Außenkante (58) erzeugt, (Fig. 4).

14. Rohrverbindung nach einem oder mehreren der Ansprüche 1 bis 9, 13, dadurch gekennzeichnet, daß die Radialprofilierung des Verformungskörpers (25) einen zur Rohrachse (13) hin gerichteten Innenbund (60) aufweist, der - in axialer Projektion - die Ringöffnung (63) der an der Metallhülse (15) sitzenden Ringscheibe (51) radial verengt und sich im Verbindungsfall an der Mantelfläche (22) des Rohres verformt (54'), (Fig. 4, 6).

15. Rohrverbindung nach Anspruch 14, dadurch gekennzeichnet, daß der Innenbund (60; 68) im dem metallischen Winkelring (50) abgekehrten Endabschnitt (62) des Verformungskörpers (25) angeformt ist, (Fig. 4, 6).

16. Rohrverbindung nach Anspruch 15, dadurch gekennzeichnet, daß der Verformungskörper (25) angrenzend an seinen Innenbund (60), eine gegenüber der Rohr-Mantelfläche (11) in Radialabstand verlaufende, insbesondere zylindrische Innenfläche (61) aufweist, (Fig. 4).

17. Rohrverbindung nach Anspruch 14 oder 15, dadurch gekennzeichnet, daß der Innenbund (60) ein stiefelförmiges, zur Rohrachse (13) hingerichtetes Radialprofil (65) aufweist, dessen Stiefelschaft-Ende (70) dem Innenscheitel (64) des Winkelrings (50) zugekehrt ist und dessen Stiefelschaft (66) einerseits sowie dessen Stiefelfuß (67) andererseits mit zueinander gegensinniger Neigung zur Rohrachse (13) verlaufen, (Fig. 6).

18. Rohrverbindung nach Anspruch 17, dadurch gekennzeichnet, daß die Neigung des Stiefelfußes (67) in Einsteckrichtung (45) des Rohres (10) weist, (Fig. 6).

19. Rohrverbindung nach Anspruch 17 oder 18, dadurch gekennzeichnet, daß der Stiefelfuß (67) im Übergangsbereich zum Stiefelschaft (66) ein vorzugsweise axial gerichtetes Dornprofil (69) aufweist, (Fig. 6).

20. Rohrverbindung nach einem oder mehreren der Ansprüche 17 bis 19, dadurch gekennzeichnet, daß der Stiefelfuß (67) an seiner Fußspitze ein Rundprofil (68) aufweist, (Fig. 6).

21. Rohrverbindung nach einem oder mehreren der Ansprüche 17 bis 20, dadurch gekennzeichnet, daß die Keilspitze (27) des keilförmigen Ringwulstes (26) von der Winkelkante (52) des metallischen Winkelrings (50) weggerichtet ist, (Fig. 6).

22. Rohrverbindung nach einem oder mehreren der Ansprüche 10 bis 12, dadurch gekennzeichnet, daß der keilförmige Ringwulst (26) in dem äußeren Endbereich (42) der Metallhülse (15) angeordnet ist, (Fig. 2).

23. Rohrverbindung nach Anspruch 22, dadurch gekennzeichnet, daß die Keilspitze (27) des Ringwulstes der Rinne (33) des Verformungskörpers (25) zugekehrt ist, (Fig. 2).

**FIG.1**

EP 0 402 700 A1

FIG.2

FIG.3

EP 0 402 700 A1

# FIG.4

# FIG.5

FIG.6

FIG.7

| | Europäisches Patentamt | **EUROPÄISCHER RECHERCHENBERICHT** | Nummer der Anmeldung |
|---|---|---|---|

EP 90 11 0205

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C-966396 (PERROT)<br>* Anspruch 1; Figur 1 *<br>--- | 1 | F16L21/035 |
| A | FR-A-2229915 (PONT-A-MOUSSON S.A.)<br>* Anspruch 1; Figuren *<br>--- | 1, 4-8 | |
| A | WO-A-8905721 (WAVIN B.V.)<br>* Zusammenfassung; Figuren *<br>--- | 1-2 | |
| A | GB-A-556441 (COGGINS)<br>* Anspruch 1; Figur 1 *<br>----- | 1, 4-7 | |
| | | | **RECHERCHIERTE SACHGEBIETE (Int. Cl.5)**<br><br>F16L<br>F16J |

Der vorliegende Recherchenbericht wurde für alle Patentansprüche erstellt

| Recherchenort | Abschlußdatum der Recherche | Prüfer |
|---|---|---|
| DEN HAAG | 11 SEPTEMBER 1990 | NARMINIO A. |